# EUROPEAN PATENT APPLICATION

(11) **EP 3 988 604 A1**
(43) Date of publication of application: **27.04.2022**
(21) Application number: 20203171.2
(22) Date of filing: 21.10.2020
(51) Int. Cl.: C08J 5/18, B32B 7/02, B32B 25/08, B32B 27/06, B32B 27/28, B32B 27/32, B65D 65/40, C08J 5/12, C08L 31/04, C09D 193/02, C09J 7/29

(54) **MULTILAYER SYSTEM COMPRISING A FOIL AND HAVING GAS BARRIER PROPERTIES**

(71) Applicant: Hubergroup Deutschland GmbH, 85551 Kirchheim-Heimstetten (DE)
(72) Inventor: GARBER, André, 85464 Finsing (DE); SCHORER, Joachim, 81673 München (DE); EICHENSEER, Corinna, 85622 Feldkirchen (DE); HANCKE, Lars, 29229 Celle (DE); CIRIELLO, Giuseppe, 36078 Valdagno (VI) (IT); FRISCHMANN, Lutz, 85737 Ismaning (DE)
(74) Representative: Henkel & Partner mbB

(57) **Abstract**

A multilayer system comprising at least the following layers,
a) a packing foil,
b) on the packing foil a primer layer containing at least 5% by weight of at least one polymer containing carboxylic groups, wherein the at least one polymer has a weight average molecular weight of at least 400 g/mol and has a carboxyl number of 50 to 200, and
c) on the primer layer a barrier layer containing at least one polyvinyl alcohol and/or at least one copolymer containing polyvinyl alcohol.

## Description

The present invention relates to a multilayer system comprising a foil, a primer layer and a barrier layer in particular for the use as a packing, such as a food or beverage packing.

Most of the commercially distributed consumer products are enclosed in a packing, which is often made of paper, cardboard, plastic foil, fabric, metal foil or the like, so as to cover, protect and/or preserve the product. Such packings are predominantly printed with an ink and/or varnish, in order to improve the optical appearance of the packing and in order to present information about the enclosed product. Prominent examples therefore are printed food packings, which present information about the enclosed product, such as about the price, about the size, about the composition, about the nutrients, about the storage life and about the country of origin of the product.

An important class of packings are foil packings, which are used to enclose sensible products, such as pharmaceutical compositions, such as medicaments for instance in the form of tablets, food, such as sausages, fish and the like, and beverages. Many of the packed products, such as medicaments, are sensitive for instance against oxygen and must therefore be protected against the contact with ambient air. Other packed goods, such as cosmetics or some foods, have a specific aroma and must be protected against a loss of the aroma for instance due to the contact with ambient air.

In order to protect the foil packed good against air and in particular against oxygen, foil packings comprising one or more gas barrier coatings have been already proposed. However, all of these known foil packings have certain drawbacks. While some of the known foil packings with a gas barrier coating are not long-term stable over a required temperature range due to insufficient adhesion of the barrier coating(s) on the foil, others have insufficient oxygen barrier properties, whereas still others are not recyclable and/or not based on renewable raw materials and/or not biodegradable.

In view of this, the object underlying the present invention is to provide a multilayer system being suitable for being used as foil packing, which has excellent gas and in particular oxygen barrier properties, which is easily and to a high degree recyclable, in which the gas barrier layer(s) is/are firmly and stably adhered to the foil even over a broad temperature range, wherein the non-foil layers of the multilayer system have a high percentage of renewable raw materials, and wherein the non-foil layers of the multilayer system are biodegradable.

In accordance with the present invention, this objective is achieved by providing a multilayer system comprising at least the following layers,
a) a packing foil,
b) on the packing foil a primer layer containing at least 5% by weight of at least one polymer containing carboxylic groups, wherein the at least one polymer has a weight average molecular weight of at least 400 g/mol and has a carboxyl number of 50 to 200, and
c) on the primer layer a barrier layer containing at least one polyvinyl alcohol and/or at least one copolymer containing polyvinyl alcohol.

This solution is based on the surprising finding that by providing a primer layer containing at least 5% by weight of at least one polymer containing carboxylic groups, wherein the at least one polymer has a weight average molecular weight of at least 400 g/mol and has a carboxyl number of 50 to 200, between a packing foil and a barrier layer containing at least one polyvinyl alcohol and/or at least one copolymer containing polyvinyl alcohol not only a multilayer system is obtained, which has excellent gas and in particular oxygen barrier properties, but also one, in which the gas barrier layer(s) is/are firmly and stably adhered to the foil even over a broad temperature range. Furthermore, due to the components of the primer layer and the barrier layer, the non-foil layers of the multilayer system have a high percentage or even consist of renewable and biodegradable raw materials. In addition, it has been found that the aforementioned multilayer system is easily and to a high degree recyclable. Other advantages of the multilayer system in accordance with the present invention are that the multilayer system is clear or transparent, respectively, i.e. without any cloudiness. Also, the primer layer as well as the barrier layer are easily printable without any pot life problems, since an interaction does not occur between the components within one layer, but only between components of adjacent layers after the single layers have been laminated above each other. Moreover, the interactions between the primer layer and the barrier layer are basically ionic interactions, but barely chemical covalent interactions. A further particular advantage is that the primer layer as well as the barrier layer may be easily arranged onto the packing foil, in particular by printing a solution of the at least one polymer containing carboxylic groups and optional further components of the primer layer in a solvent, such as an alcohol, for instance ethanol, as primer layer and by printing a solution of the at least one polyvinyl alcohol and/or at least one copolymer containing polyvinyl alcohol and optional further components of the barrier layer in water or a water/alcohol mixture as barrier layer. On account of all these reasons, the aforementioned multilayer system is particularly suitable to be used as foil packing, such as a food packing, a beverage packing, a package for pharmaceutical compositions, a cosmetic packing or a cigarette packing.

In accordance with the present invention, the primer layer is arranged on the packing foil and the barrier layer is arranged on the primer layer. This means that the primer layer is arranged above the packing foil and the barrier layer is arranged above the primer layer, both either directly or indirectly. Directly means that the primer layer is arranged directly above the packing foil, i.e. without any intermediate layer between the primer layer and the packing foil, and that the barrier layer is arranged directly above the primer layer, i.e. without any intermediate layer between the barrier layer and the primer layer. However, it is also possible that the primer layer is arranged indirectly above the packing foil, i.e. that one or more intermediate layers are arranged between the primer layer and the packing foil, and that the barrier layer is arranged indirectly above the primer layer, i.e. that one or more intermediate layers are arranged between the barrier layer and the primer layer. It is also possible that further layers are arranged on top of the barrier layer, like e.g. further inks, coatings and/or foils.

Preferably, the primer layer is arranged directly above the packing foil, i.e. without any intermediate layer between the primer layer and the packing foil, and/or the barrier layer is arranged directly above the primer layer, i.e. without any intermediate layer between the barrier layer and the primer layer.

The present invention is not particularly limited concerning the chemical nature of the packing foil. The term packing foil does mean any foil, independent from being made of plastic or metal. Good results are in particular obtained, when the packing foil is made of a polymer being selected from the group of polyolefins, polyesters, polyamides, polyurethanes, polyethylene therephthalates, polyvinylchlorides, polystyrenes, polycarbonates, polylactides, cellophane and arbitrary mixtures of two or more of the aforementioned polymers.

A particular advantage of the multilayer system of the present invention is that it is particularly suitable for using as packing foil a monofoil, i.e. a foil made of only one (plastic) material. That has the particular advantage that the multilayer system of the present invention is easily and highly recyclable, because the primer layer and the barrier layer are easily detachable from the monofoil for instance with water and/or ethanol. In contrast thereto, a respective multilayer system using a laminate or composite of two or more different foil materials is not recyclable, since the foil laminate or foil composite is, if at all, with inacceptable effort separable and thus recyclable.

Best results in view of the adhesion of the primer layer to the packing foil as well as to the barrier layer and in view of the gas and in particular oxygen barrier properties are obtained, when the packing foil is a monofoil made of oriented polypropylene, polyethylene, polyethylene terephthalate or polyamide.

In accordance with the present invention, the primer layer contains at least 5% by weight of at least one polymer containing carboxylic groups, wherein the at least one polymer has a weight average molecular weight of at least 400 g/mol and has a carboxyl number of 50 to 200. This means that the primer layer may contain only one polymer having a weight average molecular weight of at least 400 g/mol and having a carboxyl number of 50 to 200, or two or more different polymers each of which having a weight average molecular weight of at least 400 g/mol and having a carboxyl number of 50 to 200, wherein the different polymers having a weight average molecular weight of at least 400 g/mol and having a carboxyl number of 50 to 200 differ from each other in one or more of the chemical nature, the weight average molecular weight or the carboxyl number.

In accordance with a particular preferred embodiment of the present invention, the primer layer contains at least 10% by weight and more preferably at least 50% by weight of the at least one polymer containing carboxylic groups, i.e. of the polymer containing carboxylic groups, wherein the at least one polymer has a weight average molecular weight of at least 400 g/mol and has a carboxyl number of 50 to 200. Good results are in particular obtained, when the primer layer contains at least 80% by weight, more preferably at least 90% by weight, even more preferably at least 95% by weight of the at least one polymer containing carboxylic groups or if the primer layer completely consists of the at least one polymer containing carboxylic groups. In view of the recyclability and the maximum content of renewable and biodegradable raw materials, it is preferred that the primer layer contains as much of the at least one polymer containing carboxylic groups as possible.

The polymer containing carboxylic groups acts as primer as well as as binder of the primer layer. The primer layer is advantageously arranged onto the packing foil by printing a composition comprising the polymer containing carboxylic groups and a solvent, such as an alcohol, for instance ethanol, with a printing technique, such as with gravure printing. Therefore, the polymer containing carboxylic groups needs a certain viscosity and other properties. In view of this, it is preferred that the at least one polymer containing carboxylic groups has a weight average molecular weight of 400 to 2.200 g/mol and preferably of 400 to 1.100 g/mol. In accordance with the present invention, the weight average molecular weight of the at least one polymer containing carboxylic groups is determined by gel permeation chromatography using a polystyrene standard and a sample concentration of 50 to 70 mg in 10ml tetrahydrofuran (THF), wherein the column temperature is 30 °C, the temperature of the Ri-Detector (refractive index) is 35 °C and the flow rate 1 ml/min.

Good results are in particular obtained, when the at least one polymer containing carboxylic groups has a carboxyl number of 50 to 200 and preferably of 50 to 100. In accordance with the present invention, the carboxyl number of the at least one polymer containing carboxylic groups is measured by titration. It is the quantity of KOH (given in mg), needed for neutralisation of 1 g of the substance.

In accordance with a particular preferred embodiment of the present invention, the at least one polymer containing carboxylic groups comprises shellac or preferably is shellac or more preferably dewaxed shellac. Shellac does not only provide an excellent adhesion between the packing foil and the barrier layer, but is in particular a renewable and biodegradable raw material and easily recyclable, because it can be easily detached from the packing foil for example with ethanol.

Shellac is not a single compound but is an intimate mixture of several polar and non-polar components. The manner in which these molecules are linked together to build up shellac complex has led to intensive chemical research during the last few decades. Shellac is always associated with an odoriferous compound, a wax and a mixture of dyes, such as erythrolaccin and desoxyerythrolaccin, which are hydroxyanthraquinone derivatives. Due to the presence of the dyes, shellac gives a characteristic color reaction with alkali. The shellac has been fractioned into three main components namely hard resin, soft resin and wax. Resinous character of shellac is believed to be due to the association of the components through hydrogen bonding. When dewaxed shellac is slowly heated, it softens at 65 to 70°C and melts between 75 and 80°C. Both the resinous constituents of shellac, soft resin and hard resin, contain hydroxy acids and their polar groups are present at the interface of the molecule. It is presumed that the ability of shellac to adhere strongly to smooth surfaces is the result of the orientation of these polar groups. Specific gravity of shellac varies between 1.14 and 1.21. It has an average molecular weight of about 1,000 and an acid value of 65 to 75. Shellac is insoluble in water, glycerol, hydrocarbon solvents and esters, but dissolves readily in alcohol, aqueous solution of alkalies, organic acids and ketones. This finding has led to the conclusion that hydroxyl, carboxyl and carbonyl groups are present in shellac.

In a further development of the idea of the present invention, it is proposed that the primer layer of the multilayer system in accordance with the present invention contains - in addition to the at least one polymer containing carboxylic groups - further binder being not a polymer containing carboxylic groups having a weight average molecular weight of at least 400 g/mol and having a carboxyl number of 50 to 200. Preferably, the further one or more binders are selected from the group consisting of polyesters, polyethers, polyurethanes, urethane-modified resins, polyamide resins, polyacrylates, maleic resins, rosin modified fumaric resins, collophonium resins, dimerized and polymerized rosins, rosin esters, tallic resins, tall oil based resins, ketonic resins, aldehyde resins, alkyd resins, collophonium modified phenolic resins, hydrocarbon-resin modified phenolic resins, hydrocarbon resins, modified hydrocarbon resins, maleic modified resins, silicates, silicones, phenolic resins, urea urethane resins, melamine resins, epoxy resins, polyterpene resins, copal, dammar, lignin derivatives, natural resins, poly-vinylalcohols, polyvinylethers, pol-yvinylacetates, vinylacetate copolymers, polyvinylchlorides, polyvinylpropionates, polyvinylbutyrates, polymethacrylates, polystyrenes, styrene-modified resins, styreneacrylate resins, polyolefines, coumarone-indene resins, aromatic formaldehyde resins, carbamide acid resins, sulfonamide resins, chlorinated resins, nitrocellulose, ethylcellulose, CAB (cellulose acetate butyrate), CAP (cellulose acetate propionate), cellulose compounds, acrylate resins, amino acrylic resins, amino-polyester resins, Ca/Mg resinates, rubbers, polysaccharides, polyol/iscocyanate compounds, radiation and/or temperature curing resins and arbitrary combinations of two or more of the aforementioned binders. Most preferably, the further binder is nitrocellulose or a combination of nitrocellulose and polyurethane.

The optional further binder is, if present at all, preferably contained in the primer layer in an amount of 10 to 90% by weight, more preferably 15 to 75% by weight and most preferably 20 to 60% by weight based on the total weight of the primer layer.

In a further embodiment of the present invention, the primer layer can also contain additives, like e.g. wetting agents, defoamers, fillers, rheological additives and the like.

Good results are in particular obtained, when the primer layer has a thickness of 0.01 to 4 µm and more preferably of 0.05 to 3 µm.

In accordance with the present invention, the barrier layer contains at least one polyvinyl alcohol and/or at least one copolymer containing polyvinyl alcohol. Preferably, the barrier layer contains 20 to 100% by weight and more preferably 40 to 100% by weight of polyvinyl alcohol. Good results are in particular obtained, when the polyvinyl alcohol has a weight average molecular weight of 10,000 to 150,000 g/mol and more preferably of 80,000 to 130,000 g/mol.

In accordance with a further embodiment of the present invention, the multilayer system in accordance with the present invention contains at least one copolymer containing polyvinyl alcohol. The at least one copolymer containing polyvinyl alcohol may be contained in the barrier layer in addition to the above described polyvinyl alcohol (i.e. homopolymer) or instead of the polyvinyl alcohol.

In accordance with yet an alternative embodiment of the present invention, the barrier layer may comprise any arbitrary combination of two or more of the aforementioned polyvinyl alcohol homopolymers and copolymers.

In a further development of the idea of the present invention, it is suggested that the barrier layer further - i.e. in addition to the one or more polyvinyl alcohols and/or one or more copolymers containing polyvinyl alcohol - contains at least one polycationic polymer. Surprisingly, this even increases the adhesion of the barrier layer via the primer layer to the packing foil.

Polycationic polymer means in accordance with the present invention a polymer having at least 5 cationic groups per molecule and having a number average molecular weight of 1,000 to 10,000,000 g/mol. Likewise to the weight average molecular weight, the number average molecular weight of the polycationic polymer is determined by gel permeation chromatography using a polystyrene standard and a sample concentration of 50 to 70 mg in 10ml tetrahydrofuran (THF), wherein the column temperature is 30 °C, the temperature of the Ri-Detector (refractive index) is 35 °C and the flow rate 1 ml/min.

Preferably, the barrier layer of the multilayer system in accordance with this embodiment contains 0,1 to 4% by weight and more preferably 0,15 to 3% by weight of polycationic polymer.

Good results are in particular obtained, when the at least one polycationic polymer has a number average molecular weight of 5,000 to 2,000,000 g/mol, more preferably of 10,000 to 300,000 g/mol and most preferably of 10,000 to 80,000 g/mol.

In accordance with a further particular embodiment of the present invention, the at least one polycationic polymer of this embodiment of the present invention has at least 10, more preferably at least 100 or most preferably at least 150 cationic groups per molecule.

The at least one polycationic polymer may contain as cationic groups groups being selected from the group consisting of quaternary ammonium ions, pyridinium ions, imidazolium ions, pyrrolidinium ions, phosphonium ions and arbitrary combinations of two or more of the aforementioned groups.

Examples for suitable polycationic polymers are polyionenes, polyamines, polyvinylimidazolium akylsufates, polylysine and homo- and copolymers of diallylamine, of vinylpyrrolidone, of vinylimidazol, of vinylpyridine-N-oxide, of polyvinylamine, of polyamide, of polyethylenimine, of condensates from formaldehyde and compounds with at least two amino groups, such as dicyandiamide, urea, diamines, triamines and polyamines, of cationic modified starch, of cationic modified cellulose, of condensates from a diamine and epichlorohydrine, of copolymers of acryl amide and quaternary esters or amides of (meth)acrylic acid and derivates of the aforementioned compounds.

In a further development of the idea of the present invention, it is proposed that the at least one polycationic polymer is a polyolefinimine and more preferably a polyethyleneimine and/or a polypropyleneimine. Good results are in particular obtained, when the at least one polycationic polymer is a polyethyleneimine and most preferably a polyethyleneimine having a molecular weight of 10,000 to 100,000 g/mol and having at least 50 cationic groups per molecule.

The barrier layer of the multilayer system in accordance with the present invention may further contain 0.02 to 8% by weight and more preferably of 0.2 to 4% by weight of a mineral selected from the group consisting of phyllosilicates. The addition of such a mineral improves the gas and in particular oxygen barrier properties of the barrier layer.

In a further embodiment of the present invention the barrier layer can also contain additives, like e.g. wetting agents, defoamers, fillers, rheological additives and the like.

Preferably, the barrier layer of the multilayer system in accordance with the present invention has a thickness of 0.1 to 10 µm and more preferably of 0.2 to 5 µm.

As set out above, the multilayer system in accordance with the present invention has excellently good gas barrier properties and in particular oxygen barrier properties. Preferably, multilayer system in accordance with the present invention has an oxygen transfer rate of less than 10 mL/d·m², more preferably of less than 5 mL/d·m², even more preferably of at most 3 mL/d·m², still more preferably of at most 2 mL/d·m² and most preferably of at most 1.5 mL/d·m².

In a further development of the idea of the present invention, it is suggested that the primer layer and the barrier layer of the multilayer system in accordance with the present invention are composed so that they are detachable from the packing foil, preferably by contacting the multilayer system in a first step with water and in a second step with ethanol. Therefore, it is preferred that the remaining components of the primer layer as well as of the barrier layer (i.e. the optional components in addition to the at least one polymer having a weight average molecular weight of at least 400 g/mol and has a carboxyl number of 50 to 200 contained in the primer layer and in addition to the at least polyvinyl alcohol and/or at least one copolymer containing polyvinyl alcohol contained in the barrier layer) are soluble in water and/or in an alcohol, such as a C₁₋₆-alcohol, preferably ethanol or isopropanol.

In accordance with a further particular embodiment of the present invention, the primer layer and the barrier layer of the multilayer system in accordance with the present invention in sum consist of at least 50%, preferably of at least 70%, more preferably of at least 90% and most preferably completely of compounds derived from renewable and biodegradable resources.

The multilayer system in accordance with the present invention may be printed with one or more layers of printing inks, wherein one or more layers of printing inks may be provided between the packing foil and the primer layer and/or preferably on the barrier layer.

According to a further aspect, the present invention relates to a method for producing a multilayer system in accordance with any of the preceding claims, which comprises the following steps:
i) providing a packing foil,
   b) printing onto the packing foil a primer layer containing at least 5% by weight of at least one polymer containing carboxylic groups, wherein the at least one polymer has a weight average molecular weight of at least 400 g/mol and has a carboxyl number of 50 to 200, and
   c) printing onto the primer layer a barrier layer containing at least one polyvinyl alcohol and/or at least one copolymer containing polyvinyl alcohol.

As set out above, the primer layer may be printed directly onto the packing foil or indirectly by firstly printing one or more intermediate layers onto the packing foil and then printing the primer layer onto the uppermost intermediate layer.

Preferably, the primer layer is printed onto the packing foil in form of a solution of the at least one polymer containing carboxylic groups and optional further components of the primer layer in a solvent, such as an alcohol, for example a C₁₋₆-alcohol, in particular methanol, ethanol, propanol or isopropanol or a mixture of one of the aforementioned alcohols with for instance ethylacetate. The printing may be performed by any known printing technique, such as offset printing, lithography printing, intaglio printing, flexographic printing, gravure printing and preferably by gravure printing.

Good results are for instance obtained, when the solution printed as primer layer onto the packing foil contains 30 to 90% by weight of a C₁₋₆-alcohol and 10 to 70% by weight of polymer(s) containing carboxylic groups, more preferably 40 to 80% by weight of a C₁₋₆-alcohol and 20 to 60% by weight of polymer(s) containing carboxylic groups and most preferably 50 to 70% by weight of a C₁₋₆-alcohol and 30 to 50% by weight of polymer(s) containing carboxylic groups, such as about 60% by weight of a C₁₋₆-alcohol and about 40% by weight of polymer(s) containing carboxylic groups.

In an alternative embodiment, the solution printed as primer layer onto the packing foil contains 30 to 90% by weight of a C₁₋₆-alcohol and 10 to 70% by weight of binder, more preferably 40 to 80% by weight of a C₁₋₆-alcohol and 20 to 60% by weight of binder and most preferably 50 to 70% by weight of a C₁₋₆-alcohol and 20 to 50% by weight of binder, such as about 60% by weight of a C₁₋₆-alcohol and about 40% by weight of binder, wherein the binder is a mixture of polymer(s) containing carboxylic groups and one or more other binders, such as nitrocellulose and/or polyurethane, wherein the weight ratio of the polymer(s) containing carboxylic groups and the one or more other binders is 2:1 to 1:5 and preferably 2:1 to 1:1.4.

In still another alternative embodiment, the solution printed as primer layer onto the packing foil contains 20 to 60% by weight of a C₁₋₆-alcohol, 10 to 50% by weight of another solvent, such as ethylacetate, and 2 to 10% by weight of polymer(s) containing carboxylic groups and more preferably 30 to 50% by weight of a C₁₋₆-alcohol, 20 to 40% by weight of another solvent, such as ethylacetate, and 3 to 8% by weight of polymer(s) containing carboxylic groups.

In yet another alternative embodiment, the solution printed as primer layer onto the packing foil contains 20 to 60% by weight of a C₁₋₆-alcohol, 10 to 50% by weight of another solvent, such as ethylacetate, 2 to 10% by weight of polymer(s) containing carboxylic groups and 5 to 40% by weight of one or more other binders, such as nitrocellulose and/or polyurethane and more preferably 30 to 50% by weight of a C₁₋₆-alcohol, 20 to 40% by weight of another solvent, such as ethylacetate, 3 to 8% by weight of polymer(s) containing carboxylic groups and 15 to 25% by weight of one or more other binders, such as nitrocellulose and/or polyurethane.

As set out above, the barrier layer may be printed directly onto the packing foil or indirectly by firstly printing one or more intermediate layers onto the primer layer and then printing the barrier layer onto the uppermost intermediate layer.

Moreover, it is preferred that the barrier layer is printed onto the packing foil in form of a solution of the at least one polyvinyl alcohol and/or at least one copolymer containing polyvinyl alcohol and optional further components of the barrier layer in water or a water/alcohol mixture, wherein the alcohol is preferably a C₁₋₆-alcohol, in particular ethanol, propanol or isopropanol.

Good results are for instance obtained, when the solution printed as barrier layer onto the packing foil contains 70 to 98% by weight of solvent and 2 to 30% by weight of polyvinyl alcohol and/or copolymer containing polyvinyl alcohol and more preferably 75 to 95% by weight of solvent and 5 to 25% by weight of polyvinyl alcohol and/or copolymer containing polyvinyl alcohol.

In an alternative embodiment, the solution printed as barrier layer onto the packing foil preferably contains 70 to 98% by weight of solvent, 2 to 30% by weight of polyvinyl alcohol and/or copolymer containing polyvinyl alcohol and 0.05 to 0.5% by weight of polycationic polymer(s) and more preferably 75 to 95% by weight of solvent and 5 to 25% by weight of polyvinyl alcohol and/or copolymer containing polyvinyl alcohol and 0.1 to 0.3% by weight of polycationic polymer(s).

The aforementioned amounts in percent by weight relate to the total composition of dried layers or to primer and barrier lacquer before dilution to print viscosity.

Solutions of the polyvinyl alcohols or copolymers containing polyvinyl alcohol are prepared for instance by putting cold water into a vessel, adding defoamer, if needed,, stirring intensively, then adding a polyvinyl alcohol or a copolymer containing polyvinyl alcohol in an amount of (depending on component) up to about 30% by weight of the polyvinyl alcohol or a copolymer containing polyvinyl alcohol slowly while stirring, heating the stirred mixture to a temperature of about 90°C (depending on component) for at least two hours and cooling the composition down to room temperature while stirring. Alcohols are then subsequently added in mixture with water. Further components, like wetting agents, fillers and rheological additves, can be added to the stirred solution subsequently.

According to a further aspect, the present invention relates to the use of the above described multilayer system for a packing, preferably a food packing, a beverage packing, a package for pharmaceutical compositions, a cosmetic packing or a cigarette packing.

## Claims

1. A multilayer system comprising at least the following layers,
a) a packing foil,
b) on the packing foil a primer layer containing at least 5% by weight of at least one polymer containing carboxylic groups, wherein the at least one polymer has a weight average molecular weight of at least 400 g/mol and has a carboxyl number of 50 to 200, and
c) on the primer layer a barrier layer containing at least one polyvinyl alcohol and/or at least one copolymer containing polyvinyl alcohol.

2. The multilayer system in accordance with claim 1, wherein the packing foil is made of a polymer selected from the group of polyolefins, polyesters, polyamides, polyurethanes, polyethylene therephthalates, polyvinylchlorides, polystyrenes, polycarbonates, polylactides, cellophane and arbitrary mixtures of two or more of the aforementioned polymers.

3. The multilayer system in accordance with claim 1 or 2, wherein the packing foil is a monofoil.

4. The multilayer system in accordance with any of the preceding claims,
wherein the packing foil is a monofoil made of oriented polypropylene, polyethylene, polyethylene terephthalate or polyamide.

5. The multilayer system in accordance with any of the preceding claims,
wherein the primer layer contains at least 50% by weight, preferably at least 80% by weight, more preferably at least 90% by weight and most preferably at least 95% by weight or consists of the at least one polymer containing carboxylic groups.

6. The multilayer system in accordance with any of the preceding claims, wherein the at least one polymer containing carboxylic groups has a weight average molecular weight of 400 to 2,200 g/mol and preferably of 400 to 1,100 g/mol.

7. The multilayer system in accordance with any of the preceding claims, wherein the at least one polymer containing carboxylic groups comprises shellac or preferably is shellac and preferably dewaxed shellac.

8. The multilayer system in accordance with any of the preceding claims, wherein the primer layer contains 10 to 90% by weight, preferably 15 to 75% by weight and most preferably 20 to 60% by weight of the further binder.

9. The multilayer system in accordance with any of the preceding claims, wherein the primer layer has a thickness of 0.01 to 4 µm and preferably of 0.05 to 3 µm.

10. The multilayer system in accordance with any of the preceding claims, wherein the barrier layer contains 20 to 100% by weight and preferably 40 to 100% by weight of polyvinyl alcohol having a weight average molecular weight of 10,000 to 150,000 g/mol and preferably of 80,000 to 130,000 g/mol.

11. The multilayer system in accordance with any of the preceding claims, wherein the barrier layer further contains at least one polycationic polymer, wherein preferably the barrier layer contains 0.1 to 4% by weight and preferably 0.15 to 3% by weight of polycationic polymer.

12. The multilayer system in accordance with claim 11, wherein the least one polycationic polymer has a number average molecular weight of number average molecular weight of 1,000 to 10,000,000 g/mol, preferably of 5,000 to 2,000,000 g/mol, more preferably of 10,000 to 300,000 g/mol and most preferably of 10,000 to 80,000 g/mol, wherein preferably the least one polycationic polymer is a polyolefinimine and preferably a polyethyleneimine and/or a polypropyleneimine.

13. The multilayer system in accordance with any of the preceding claims having an oxygen transfer rate of less than 10 mL/d·m², preferably of less than 5 mL/d·m², more preferably of at most 3 mL/d·m², still more preferably of at most 2 mL/d·m² and most preferably of at most 3 mL/d·m².

14. A method for producing a multilayer system in accordance with any of the preceding claims, which comprises the following steps:
i) providing a packing foil,
b) printing onto the packing foil a primer layer containing at least 5% by weight of at least one polymer containing carboxylic groups, wherein the at least one polymer has a weight average molecular weight of at least 400 g/mol and has a carboxyl number of 50 to 200, and
c) printing onto the primer layer a barrier layer containing at least one polyvinyl alcohol and/or at least one copolymer containing polyvinyl alcohol.

15. Use of multilayer system in accordance with any of claims 1 to 13 for a packing, preferably a food packing, a beverage packing, a package for pharmaceutical compositions, a cosmetic packing or a cigarette packing.
